# EUROPEAN PATENT APPLICATION

(11) **EP 1 574 978 A1**
(43) Date of publication of application: **14.09.2005**
(21) Application number: 02786091.5
(22) Date of filing: 11.12.2002
(51) Int. Cl.: G06F 17/60

(54) **PERSONAL INFORMATION CONTROL SYSTEM, MEDIATION SYSTEM, AND TERMINAL UNIT**

(71) Applicant: FUJITSU LIMITED, Kanagawa 211-8588 (JP)
(72) Inventor: HOUTANI, Tsunao, FUJITSU LIMITED, Kawasaki-shi, Kanagawa 211-8588 (JP)
(74) Representative: Sunderland, James Harry
(86) International application number: PCT/JP2002/012988
(87) International publication number: WO 2004/053759

(57) **Abstract**

A personal information management system is provided with a service provider system of a service provider, a terminal device of a user who wants to receive a service provided by the service provider, and a mediation system for mediating personal information of the user to be given to the service provider. The terminal device is provided with an personal information storage portion for storing personal information about one or more items of the user, a personal authentication portion for authenticating the user to have a right to use the terminal device, and a personal information transmission portion for transmitting the user's personal information in accordance with an instruction from the mediation system. The service provider system is provided with a personal information requesting portion for requesting the mediation system for the user's personal information about items necessary for the service provider to provide the service, and a personal information reception portion for receiving the requested user's personal information from the terminal device of the user. The mediation system is provided with a terminal suitability determining portion for determining whether or not the terminal device of the user is suitable for receiving the service, and a transmission instructing portion for instructing the terminal device to transmit the user's personal information about the necessary items requested by the personal information requesting portion of the service provider system of the service provider to the service provider system when the personal authentication portion of the terminal device of the user authenticates the user to have the right and the terminal suitability determining portion determines that the terminal device is suitable for receiving the service.

## Description

### TECHNICAL FIELD

The present invention relates to a system for managing personal information of users.

### BACKGROUND ART

Conventionally, there are proposed techniques for providing a service such as online shopping to users via a network such as the Internet. Users have to tell a service provider who provided the service about their personal information including a name, an address, a cover address and a number of a credit card prior to utilizing the service.

However, in some cases users may be required to tell personal information that has no relationship with the service from a service provider. Once personal information becomes away from a user, the personal information can be leaked or scattered.

In such as situation, many users have become conscious of managing their personal information by themselves as much as possible and of minimizing information to be given to a service provider, recently.

On the other hand, service providers conventionally request users to enter a user ID and a password for authenticating a user who wants to receive a service and determines that the user is a regular user if the entered user ID and password are correct.

In order to manage personal information, the following techniques are proposed. Japanese unexamined patent publication No. 2002-99829 describes an invention in which a server for managing personal information is provided between a user's terminal that is connected to a network and a service providing server that requires personal information of the user for providing the service. In addition, Japanese unexamined patent publication No. 2002-7894 describes an invention in which customer information (personal information) is accumulated in a database of a customer management system in a unified way.

Japanese unexamined patent publication No. 2001-350721 describes an invention in which a user discloses a title of information to be provided via an information mediation terminal. A person or a company who want to obtain the information (a service provider) displays the title on a Web browser of the terminal and designates the same. Then, the user's terminal transmits the information to the information mediation terminal when a notice of the designation is received. Then, the information mediation terminal keeps the information so that the service provider's terminal can obtain the information.

However, in the inventions described in Japanese unexamined patent publication No. 2002-99829 and Japanese unexamined patent publication No. 2002-7894, personal information is placed in a system that is away from the user's management and is opened on the network, so there is a potential that personal information is leaked, and users may feel insecure. In addition, although a time period of placing personal information on a system on a network is short in the invention described in Japanese unexamined patent publication No. 2001-350721, users may still feel insecure.

On the other hand, if a service provider authenticates all users who enter a correct user ID and a correct password, it may permit an unauthorized usage of the service and as a result may lose users' confidence. A user who is targeted of the unauthorized usage may suffer damage.

In consideration of such a problem, an object of the present invention is to provide a system in which users can manage their own personal information and give personal information safely to a service provider for receiving a service so that a service with high reliability is provided.

### DISCLOSURE OF THE INVENTION

A personal information management system according to the present invention includes a service provider system of a service provider, a terminal device of a user who wants to receive a service provided by the service provider, and a mediation system for mediating personal information of the user to be given to the service provider.

The terminal device of the user is provided with an personal information storage portion for storing personal information about one or more items of the user, a personal authentication portion for authenticating the user to have a right to use the terminal device, and a personal information transmission portion for transmitting the user's personal information in accordance with an instruction from the mediation system.

The service provider system of the service provider is provided with a personal information requesting portion for requesting the mediation system for the user's personal information about items necessary for the service provider to provide the service, and a personal information reception portion for receiving the requested user's personal information from the terminal device of the user.

The mediation system is provided with a terminal suitability determining portion for determining whether or not the terminal device of the user is suitable for receiving the service, and a transmission instructing portion for instructing the terminal device to transmit the user's personal information about the necessary items requested by the personal information requesting portion of the service provider system of the service provider to the service provider system when the personal authentication portion of the terminal device of the user performs authentication of the user to have the right and the terminal suitability determining portion determines that the terminal device is suitable for receiving the service.

Preferably, the mediation system is provided with an item storage portion for storing item information that indicates items of personal information necessary for the service provider to provide the service prior to reception of the service. The transmission instructing portion instructs to transmit the user's personal information about items indicated in the item information.

In addition, the item storage portion stores first item information that indicates items of personal information necessary for the service provider directly and second item information that indicates items of personal information necessary for a secondary provider that is an agency for the service provider as the item information, and the transmission instructing portion instructs to transmit the user's personal information about items indicated in the first item information to the service provider and to transmit the user's personal information about items indicated in the second item information to the secondary provider.

In addition, the personal information transmission portion transmits the user's personal information after encrypting it by a public key cryptography method using different public keys for addresses, respectively. In addition, the personal information storage portion stores personal information whose contents are recognized to be correct by a person except the user as the user's personal information.

In addition, the terminal device of the user is provided with a characteristic information storage portion for storing characteristic information that indicates physical characteristics of the user and a characteristic input portion for entering the physical characteristics of the user. Then, the personal authentication portion performs the authentication in accordance with the entered physical characteristics of the user and the characteristic information stored in the characteristic information storage portion.

In addition, the terminal device is provided with a service requesting portion for requesting the service provider to provide the service to the user when the user is authenticated to have the right.

### BRIEF DESCRIPTION OF THE DRAWINGS

Fig. 1 shows an example of an overall structure of a personal information management system according to the present invention.
Fig. 2 shows an example of a hardware structure of a mediation system.
Fig. 3 shows an example of a functional structure of the mediation system.
Fig. 4 shows an example of a functional structure of a service providing system.
Fig. 5 shows an example of a functional structure of a terminal device.
Fig. 6 shows an example of personal information.
Fig. 7 shows an example of personal information.
Fig. 8 is a flowchart showing an example of a flow of a process of preparation necessary for a service provider.
Fig. 9 is a flowchart showing an example of a flow of a process of preparation necessary for a user.
Fig. 10 is a flowchart showing an example of a flow of a process of providing a service in the personal information management system.
Fig. 11 is a flowchart showing an example of a flow of an authentication process.
Fig. 12 is a flowchart showing an example of a flow of a process for determining whether usable or not.
Fig. 13 is a flowchart showing an example of a flow of a process for selecting a secondary provider.
Fig. 14 is a flowchart showing an example of a flow of a process for collecting necessary information.

### BEST MODE FOR CARRYING OUT THE INVENTION

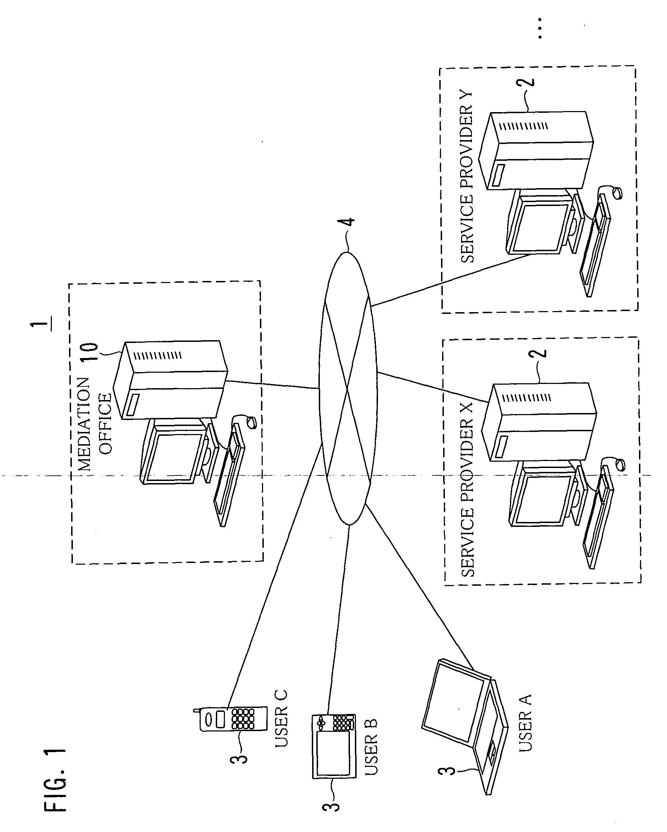

The present invention will be described in more detail with reference to the attached drawings. Fig. 1 shows an example of an overall structure of a personal information management system 1 according to the present invention.

As shown in Fig. 1, the personal information management system 1 according to the present invention includes a mediation system 10, a service providing system 2, a terminal device 3 and a network 4. The mediation system 10, the service providing system 2 and the terminal device 3 can be connected to each other via the network 4. As the network 4, the Internet, a public telephone line or a private line can be used.

As the terminal device 3, a workstation, a personal computer, a PDA (Personal Digital Assistant) or a cellular phone in which a Web browser and an electronic mail program are installed can be used.

The service providing system 2 is provided to each service provider (for example, an internet service provider or a banking firm) that provides a service such as online shopping, ticket booking, auction or online banking to a user of the terminal device 3, and it mainly performs a process for provide the service.

The service provider may require personal information of a user to provide a service to the user. For example, a service provider providing a service of online shopping may require personal information about items including an address as a destination of goods, a telephone number or an electronic mail address for making contact with the user in a trouble or other cases, and a card number of a credit card that is used for payment. In this embodiment, personal information of the user is managed by the terminal device 3 of the user. The service provider can obtain personal information about minimum necessary items from the terminal device 3 of the user when necessity occurs.

On this occasion, however, the service provider does not request the terminal device 3 of the user directly for the necessary personal information but requests the mediation system 10. The mediation system 10 instructs the terminal device 3 to send the requested personal information to the service providing system 2 of the service provider. Namely, the mediation system 10 performs a mediation process for relaying a request from the service providing system 2 to the terminal device 3. This mediation system 10 is administrated by a public organization of a government or an office thereof or an organization authorized by a public organization that can be trusted not to use personal information improperly. Hereinafter, the organization that administrates the mediation system 10 is referred to as a "mediation office".

Furthermore, the mediation office examines whether or not contents of personal information of users are correct and affixes a digital signature to personal information that has passed the examination. The user can receive a service from a service provider only by using personal information that has passed the examination and is accompanied with the digital signature.

In addition, the user has to get authentication from the terminal device 3 used by the user (to be not other person pretending to be the user) when receiving a service provided by the service provider. Furthermore, it is necessary to get authentication from the mediation system 10 for confirming the terminal device 3 can be used for receiving the service. The user can receive the service when both the user authentication and the terminal device authentication are obtained.

As the mediation system 10 and the service providing system 2, a server machine having functions of an electronic mail server, a CGI (Common Gateway Interface) and a Web server can be used, for example. The mediation system 10 can be constituted with one server machine as shown in Fig. 1 or with plural server machines and various devices in combination.

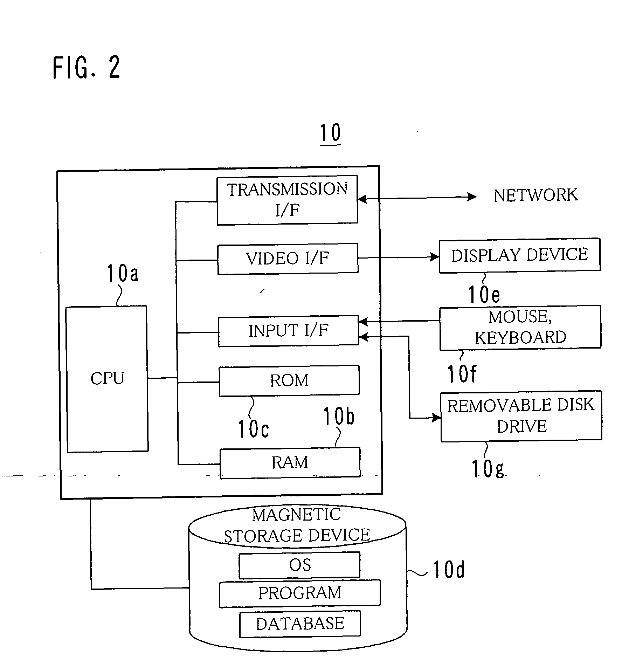

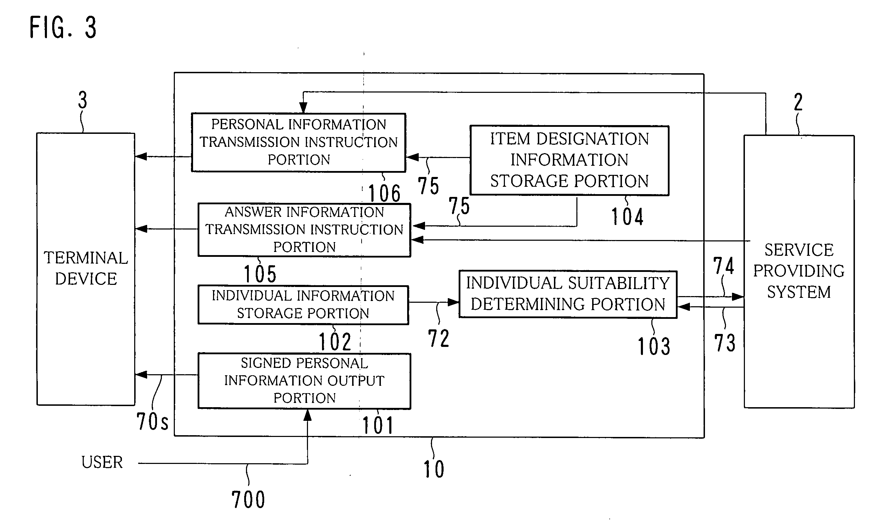

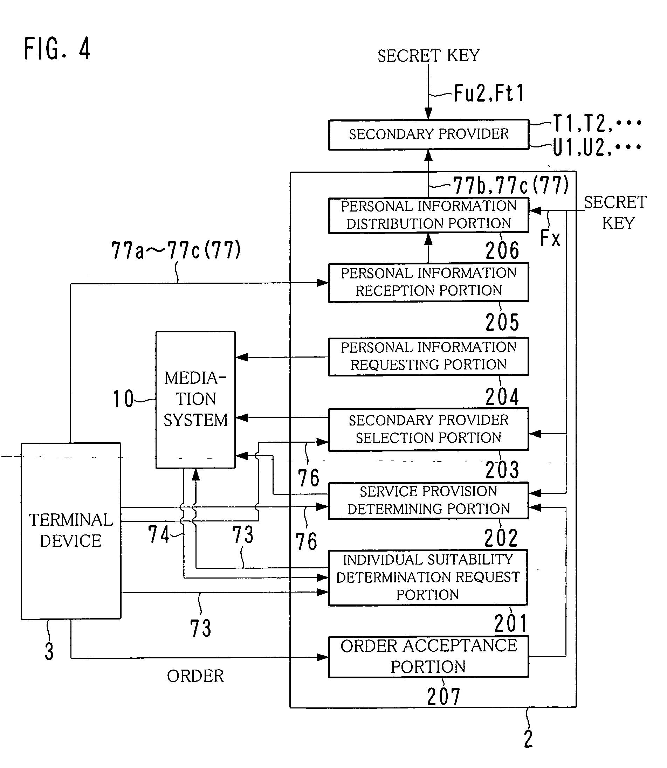

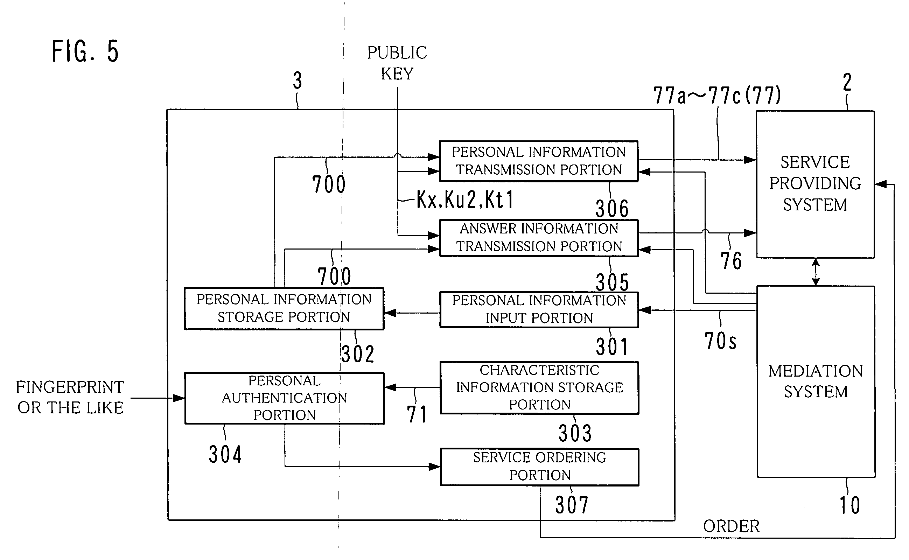

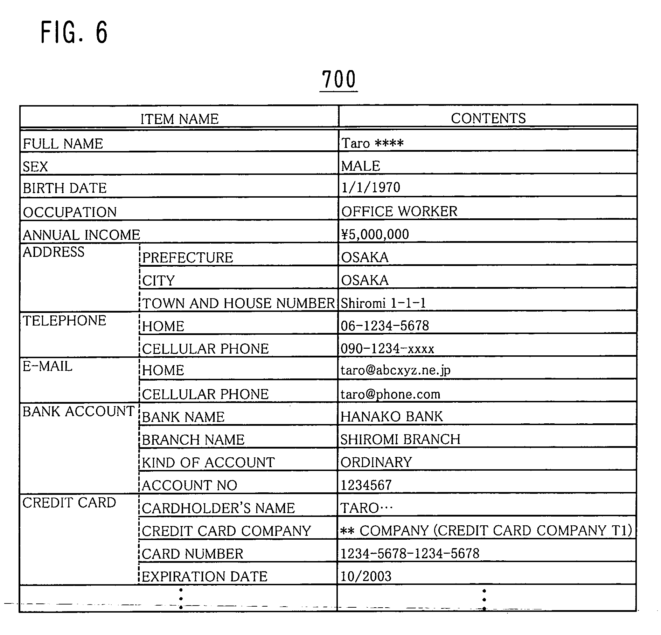

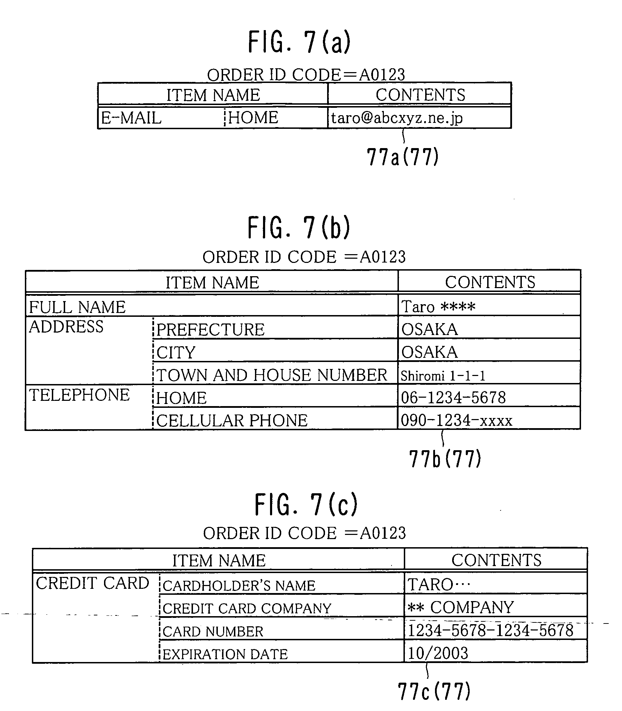

Fig. 2 shows an example of a hardware structure of a mediation system 10, Fig. 3 shows an example of a functional structure of the mediation system 10, Fig. 4 shows an example of a functional structure of a service providing system 2, Fig. 5 shows an example of a functional structure of a terminal device 3, Fig. 6 shows an example of personal information 700, and Fig. 7 shows an example of personal information 77.

As shown in Fig. 2, the mediation system 10 includes a CPU 10a, a RAM 10b, a ROM 10c, a magnetic storage device 10d, a display device 10e, an input device 10f such as a mouse or a keyboard, a removable disk drive 10g such as a flexible disk drive or a CD-R drive, and various interfaces. An operating system (OS) and programs for realizing the above-mentioned functions, and programs and data for realizing functions shown in Fig. 3 are installed in the magnetic storage device 10d. These programs and data are loaded to the RAM 10b if necessary, and the programs are executed by the CPU 10a.

Hardware structures of the service providing system 2 and the terminal device 3 are also the same as the structure of the mediation system 10 shown in Fig. 2. Programs and data for realizing functions shown in Figs. 4 and 5 are installed in the magnetic storage devices of the service providing system 2 and the terminal device 3. The terminal device 3 is connected to a device for entering a fingerprint, a microphone, a digital camera or the like if necessary.

However, if a PDA or a portable terminal device is used as the terminal device 3, necessary programs and others are written in the ROM 10c. The removable disk drive 10g such as a flexible disk is connected externally if necessary.

Next, the functions shown in Figs. 3, 4 and 5 will be described while dividing them roughly into functions for obtaining reliability of personal information, functions for obtaining security and reliability of business and functions for receiving and providing the service.

### [Functions for obtaining reliability of personal information]

As described above, the mediation office examines whether or not contents of personal information of a user is correct. The user submits his or her personal information 700, which is about predetermined items as shown in Fig. 6 for example, to the mediation office so as to apply for the examination. The submission of the personal information 700 is performed by mailing sheets of paper on which these items are written or a removable disk such as a flexible disk or a CD-ROM on which these items are recorded to the mediation office. On this occasion, a copy of an identification of the user is enclosed. Note that if the mediation office wants to examine identification of the user more securely, the mediation office may accept the application only at a service window of the mediation office and request the applicant to show a ID card with a photograph such as a drivers license card or a passport. Other methods can be used as long as it is possible to check the user identification.

The examination of the personal information 700 is basically performed by a staff member of the mediation office. However, it is possible that the mediation office asks a bank or a credit card company to examine personal information about items about a bank account or a credit card. Alternatively, it is possible that a user applies to a bank or a credit card company to directly for examination of the items not through the mediation office. In this case, the bank or the credit card company becomes one of "mediation offices". Furthermore, it is possible that various organizations do the examination in accordance with the items.

A signed personal information output portion 101 of the mediation system 10 shown in Fig. 3 affixes a digital signature to the personal information 700 that has passed the examination among the personal information 700 submitted by users so as to generate signed personal information 70s. Then, the signed personal information 70s is delivered to the terminal device 3 of the user who submitted the personal information. If the personal information did not pass the examination, the result is noticed to the user with the reason.

The output of the signed personal information 70s may be performed by sending electronic mail to which the signed personal information 70s is attached to an electronic mail address of the user who submitted the personal information. Alternatively, it may be performed by writing the signed personal information 70s into a removable disk. In this case, the removable disk is sent to an address of the user by a registered mail or the like.

A personal information input portion 301 of the terminal device 3 shown in Fig. 5 performs a process for entering personal information with the digital signature delivered from the mediation system 10, i.e., the signed personal information 70s in the terminal device 3. The signed personal information 70s that is entered is stored and managed in the personal information storage portion 302.

It is desirable that all information and programs that are sent from the mediation system 10 to the terminal device 3 are processed with signature for securing that they are not manipulated because they are relevant to an access to personal information.

### [Functions for obtaining security and reliability of business]

The characteristic information storage portion 303 stores biometric information 71 of each user who has a right to use the terminal device 3. The biometric information 71 is information that indicates physical characteristics of a human being. As the biometric information 71, for example, a fingerprint, a voice print, an iris of a pupil, a handwriting or the like that is unique to a person can be used.

The personal authentication portion 304 compares the user's physical characteristics that is entered (for example, user's fingerprint entered by the fingerprint input device) with the biometric information 71 stored in the characteristic information storage portion 303, so as to determine whether the user has a right to use the terminal device 3. Namely, the user authentication process is performed by a biometric authentication technology.

The user who has been authenticated to have a right to use by the personal authentication portion 304 can receive a service provided by the service provider. In addition, the terminal device 3 works as the user's terminal device. For example, if it is authenticated that the user who entered a fingerprint is a user A, the terminal device 3 works as a terminal device of the user A. Note that the user authentication may be performed when the terminal device 3 is activated or just before receiving the service.

An individual information storage portion 102 shown in Fig. 3 stores individual information 72 in connection with a terminal ID code 73 for each terminal device 3, and the individual information 72 indicates characteristics of the terminal device 3. In this embodiment, the "individual" means a terminal device that is used for receiving a service provided by a service provider. The individual information 72 can be, for example, information about a hardware structure of the terminal device 3, an IP address or a MAC address assigned to the terminal device 3, information about a model of the terminal device 3, or a serial number or a telephone number of a cellular phone if the terminal device 3 is the cellular phone.

An individual suitability determination request portion 201 of the service providing system 2 shown in Fig. 4 performs the process for requesting the mediation system 10 to determine whether or not the terminal device 3 that the user is using at present is suitable for receiving the service provided by the service provider. On this occasion, the individual suitability determination request portion 201 transmits the terminal ID code 73 obtained from the terminal device 3 to the mediation system 10.

An individual suitability determining portion 103 shown in Fig. 3 performs determination whether or not the terminal device 3 indicated in the terminal ID code 73 received from the service providing system 2 is suitable for receiving the service provided by the service provider. This determination is performed, for example, by comparing a state of the terminal device 3 that the user is using at present and the individual information 72 stored in the individual information storage portion 102 corresponding to the terminal ID code 73. If they match one another, it is determined that the terminal device 3 that the user is using at present is suitable for receiving the service. If they don't match, it is determined that the terminal device 3 is not suitable because there is potential of other person's using the terminal device 3 pretending to be the user for receiving the service. The result of the determination is transmitted to the service providing system 2 that made the request as individual suitability information 74 that indicates "suitable" or "not suitable".

Alternatively, if the terminal device 3 complies the TCPS (Trusted Computing Platform Specifications) that is a specification defined by TCPA (Trusted Computing Platform Alliance), it is possible to perform the determination by the method proposed by TCPA. For example, if the terminal device 3 is equipped with a security circuit (a security chip) of the TCPA specification, the security circuit may be used for the determination.

### [Function for receiving and providing the service]

Using the terminal device 3, the user has access to a Web site of the service provider who provides the desired service by designating a URL on the Web browser. Hereinafter, an example will be described in which a user A has access to a Web site of a service provider X who provides online shopping. The user A selects desired goods (or service) with reference to descriptions or images in the Web site and designates the name or the image of the goods by clicking. Thus, a service of selling the goods is selected.

Then, the service ordering portion 307 shown in Fig. 5 performs a process for ordering the goods (a request for the service) from the service providing system 2 of the service provider X. If the order is accepted by an order acceptance portion 207 of the service providing system 2, a service provision determining portion 202 determines whether or not the goods can be sold to the user A. For example, when the goods are liquor, it is determined that the goods can be sold if the user A is at the age of twenty or more. When the area where goods are sold is limited, it is determined that the goods can be sold if an address of the user A is within the area. The determination process is performed in the following procedure.

The service provision determining portion 202 requests the mediation system 10 to transmit personal information necessary for performing the determination. However, the service provider X has to inform the mediation office of items of necessary personal information so that they are registered in the mediation system 10 prior to starting sales of the goods (provision of the service). For example, if the service provider X wants to determine whether liquor can be sold or not, an item indicating whether or not the age is twenty or more. If the service provider X wants to determine whether or not limited area goods can be sold or not, an item indicating whether or not the address of the user is within the area. These items are examined by the mediation office and are registered if recognized to be necessary for providing the service. Therefore, if an item that is not relevant to provision of the service is included, the registration is refused. Note that these items are stored (registered) as item designation information 75 in an item designation information storage portion 104 of the mediation system 10.

An answer information transmission instruction portion 105 shown in Fig. 3 instructs the terminal device 3 of the user A to transmit personal information of item requested by the service provision determining portion 202 to the service providing system 2 of the service provider X. This instruction is performed in accordance with the item designation information 75 that is registered in advance in the item designation information storage portion 104. Note that it is possible to perform the instruction by sending a program for extracting personal information of the requested item to the terminal device 3. The program in this case is described with a language such as Java applet or JavaScript, for example.

An answer information transmission portion 305 shown in Fig. 5 extracts necessary personal information from personal information 700 of the user A stored in the personal information storage portion 302 in accordance with the instruction from the answer information transmission instruction portion 105 or by executing the program received from the same, and it generates answer information 76 in accordance with the necessary personal information so as to send the answer information 76 to the service providing system 2 of the service provider X. For example, if a personal information indicating whether or not an age of the user A is twenty or more is requested, age information is extracted from the personal information 700 of the user A. Then, if the age of the user is twenty or more, the answer information 76 indicating "Yes" is generated and transmitted. If the age of the user is less than twenty, the answer information 76 indicating "No" is generated and transmitted. However, this answer information 76 is encrypted before being transmitted for preventing leakage of information.

Then, the service provision determining portion 202 shown in Fig. 4 receives the answer information 76 as the requested personal information and determines whether or not the goods can be sold to the user A in accordance with the answer information 76. If it is determined that the goods cannot be sold, the decision is sent to the terminal device 3 of the user A.

Note that the encryption of the answer information 76 is performed in accordance with PKI (Public Key Infrastructure). Namely, it is performed by a public key cryptography method. The service provider X opens a public key Kx to all users and manages a secret key Fx corresponding to this public key Kx so that nobody can know it. As shown in Fig. 5, the terminal device 3 uses this public key Kx so as to encrypt the answer information 76. Then, the service providing system 2 of the service provider X decodes the encrypted answer information 76 by using the secret key Fx. Hereinafter, transmission of the personal information or other data from the terminal device 3 to the service providing system 2 is performed by the public key cryptography method.

A secondary provider selection portion 203 shown in Fig. 4 performs a process for selecting a secondary provider that delivers goods or collects payment for the service provider. This process is performed in the following procedure.

For example, it is supposed that the service provider X has business tie-ups with secondary providers including a trucking company U1 that provides delivery service to homes in East Japan, a trucking company U2 that provides delivery service to homes in West Japan, and credit card companies T1 and T2. In this case, the secondary provider selection portion 203 request the mediation system 10 for personal information about two items in order to select one trucking company to be an agent of delivering goods and one credit card company to be an agent of collecting payment. One of the two items is about whether the address of the user A is in East Japan or in West Japan, and another item is about which one of the credit card companies T1 and T2 the user A signed up to. Note that the service provider X has to register the item designation information 75 indicating these items in the mediation system 10 in advance for making these requests as described above.

On this occasion, the answer information transmission instruction portion 105 shown in Fig. 3 and the answer information transmission portion 305 shown in Fig. 5 perform the process similar to the above-mentioned process. Namely, the answer information transmission instruction portion 105 instructs the terminal device 3 of the user A to transmit the personal information about the item requested by the secondary provider selection portion 203 to the service providing system 2 of the service provider X. In addition, the answer information transmission portion 305 extracts the requested personal information from the personal information 700 of the user A in accordance with the instruction and generates the answer information 76, which is transmitted to the service providing system 2 of the service provider X. For example, if the personal information 700 of the user A has contents as shown in Fig. 6, the answer information 76 having contents of "address = West Japan" and "credit card company = T1" is transmitted to the service providing system 2.

Then, the secondary provider selection portion 203 shown in Fig. 4 selects the trucking company U2 and the credit card company T1 as secondary providers in accordance with this answer information 76.

The personal information requesting portion 204 requests the mediation system 10 to transmit personal information of the user A about the item necessary for selling goods to the user A finally to the service provider X and each of the secondary providers. For example, the personal information requesting portion 204 requests the mediation system 10 to transmit personal information about electronic mail for making contact with the user A when a trouble or the like occurs to the service provider X, personal information about a name, an address and a telephone number of the destination of the goods to the trucking company U2, and personal information about a credit card for collecting payment to the credit card company T1. However, as described above, the item designation information 75 indicating these necessary items must be registered in the mediation system 10 in advance. This item designation information 75 includes first item information and second item information described in claim 3.

The personal information transmission instruction portion 106 shown in Fig. 3 instructs the terminal device 3 of the user A to transmit each personal information requested by the personal information requesting portion 204 to the service provider X and each of the secondary providers. On this occasion, it is possible to transmit a program for extracting the requested information to the terminal device 3 in the same manner as in the case of the answer information transmission instruction portion 105.

The personal information transmission portion 306 shown in Fig. 5 extracts the requested personal information from the personal information 700 of the user A in accordance with the instruction from the personal information transmission instruction portion 106 and encrypts them so as to transmit them to a predetermined service provider and secondary providers. For example, personal information 77 (77a-77c) as shown in Figs. 7(a)-7(c) is extracted from the personal information 700 shown in Fig. 6. Then, the personal information 77a is transmitted to the service provider X, the personal information 77b is transmitted to the trucking company U2, and the personal information 77c is transmitted to the credit card company T1. As the personal information 77 is extracted for each of the secondary providers and is transmitted to the same, leakage of the personal information by a malicious decode during transmission can be prevented even if the encryption method that will be described later becomes vulnerable. Note that the same order ID code is affixed to the personal information 77a-77c so as to make them connected with each other. It is possible to group the personal information 77a-77c and to transmit them to the service providing system 2 of the service provider X.

Note that the encryption processes of the personal information 77a-77c are performed by using different public keys. For example, the personal information 77a is encrypted by using the public key Kx of the service provider X that is the destination of the transmission. Similarly, the personal information 77b and 77c are encrypted by using the public key Ku2 of the trucking company U2 and the public key Kt1 of the credit card company T1, respectively. Secret keys Fx and Fu2 and Ft1 corresponding to these public keys Kx and Ku2 and Kt1 are only owned by the service provider X, the trucking company U2 and the credit card company T1, respectively. Therefore, they cannot see contents of the personal information 77 that is sent to other than themselves. Namely, each of the service providers cannot see the personal information is not necessary for the service the provider.

The personal information 77 is received by the personal information reception portion 205 of the service providing system 2 shown in Fig. 4. When the personal information 77b and 77c are received, a personal information distribution portion 206 transfers them to the trucking company U2 and the credit card company T1, respectively. Then, the service provider X and each of the secondary providers perform the process for providing the service including shipping of goods and collecting payment in accordance with the obtained personal information 77 of the user A.

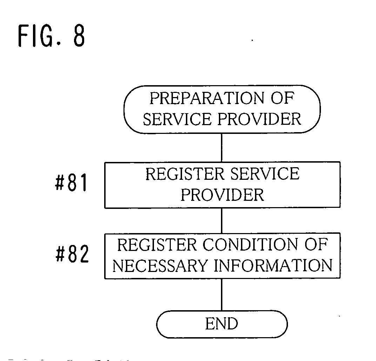

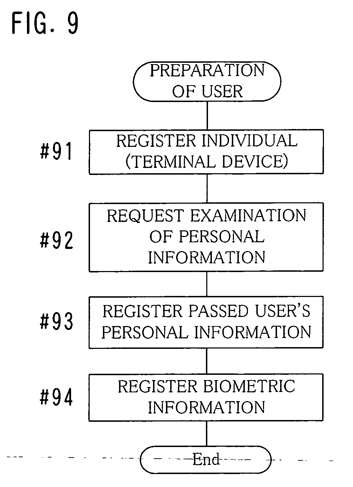

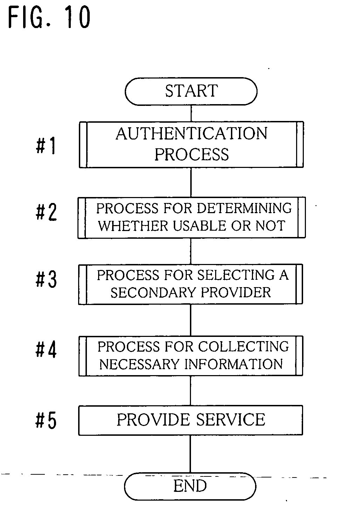

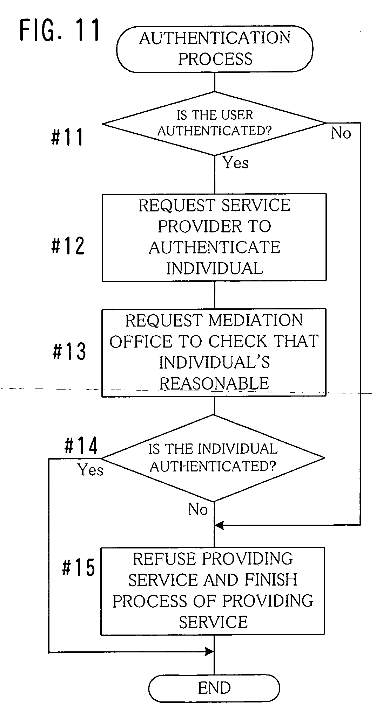

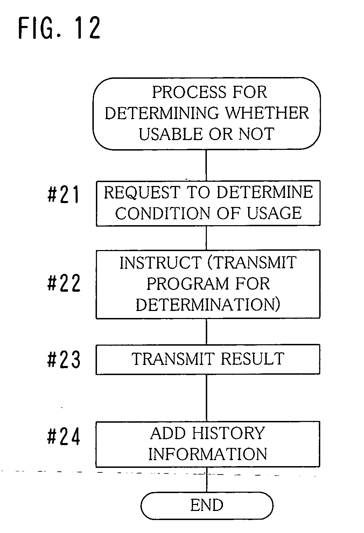

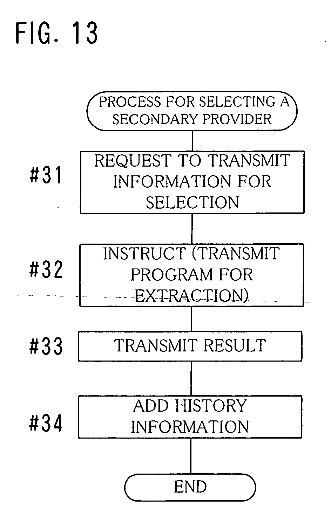

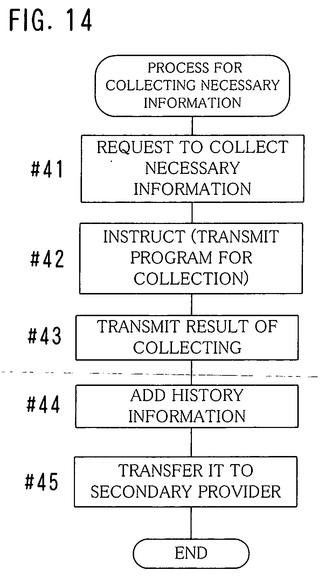

Fig. 8 is a flowchart showing an example of a flow of a process of preparation necessary for a service provider, Fig. 9 is a flowchart showing an example of a flow of a process of preparation necessary for a user, Fig. 10 is a flowchart showing an example of a flow of a process of providing a service in the personal information management system 1, Fig. 11 is a flowchart showing an example of a flow of a authentication process, Fig. 12 is a flowchart showing an example of a flow of a process for determining whether usable or not, Fig. 13 is a flowchart showing an example of a flow of a process for selecting a secondary provider, and Fig. 14 is a flowchart showing an example of a flow of a process for collecting necessary information.

Next, a flow of a process in the personal information management system 1 will be described with reference to flowcharts.

The service provider has to do preparation as shown in Fig. 8 prior to providing a service to a user. Namely, the service provider asks the mediation office to permit the use of the mediation system 10 so that information about the service provider (for example, a name of the company, a name of a representative, an address, a cover address, a name and an electronic mail address of a clerk, a URL of a Web site or the like) is registered in the mediation system 10 (#81). Note that the mediation office examines the service provider and may refuse the registration if the result of the examination indicates that the service provider has little reliability about keeping secret of the personal information, for example.

Then, the item designation information 75 that indicates which items of the personal information are necessary for providing the service is registered in the mediation system 10 (#82). Note that there is a case where the item designation information 75 must be newly registered when sales of a new product is started or provision of a new service is started.

On the other hand, the user must do preparation as shown in Fig. 9 prior to receiving the service from the service provider. Namely, information about the terminal device 3 (individual) that is used for receiving the service is registered in the mediation system 10 (#91). The personal information of the user is shown to the mediation office so that the mediation office can examine whether or not contents of the personal information is correct (#92). When the personal information passes the examination, it is stored in the terminal device 3 (#93). Then, the user's fingerprint or voice print is registered as biometric information 71 in the terminal device 3 (#94). Note that the processes in Steps #91, #92-#93 and #94 may be performed in parallel or in a different order.

After the preparation is completed, the service is provided from the service provider to the user in the procedure shown in Fig. 10, for example. First, the authentication processes are performed for the user who receives the service and for the user's terminal device 3 (#1). More specifically, as shown in Fig. 11, the user's fingerprint or the like is entered by the terminal device 3, and it is compared with the biometric information 71 that is registered in advance for authenticating the user (#11). Namely, the biometric authentication is performed.

If the user is not authenticated (No in #11), the user is regarded as unable to receive the service (#15). If the user is authenticated (Yes in #11), it asks via the service providing system 2 to the mediation system 10 to determine (authenticate) whether or not the user's terminal device 3 is suitable for use of receiving the service (#12 and #13).

If it is determined that the terminal device 3 is suitable for use (Yes in #14), the user is determined to be able to receive the service from the service provider by using the terminal device 3 that is being used at present. Then, the process of Step #2 and subsequent steps shown in Fig. 10 are performed. Otherwise, the user is determined to be unable to receive the service by using the terminal device 3, and the process for the service is finished (#15).

With reference to Fig. 10 again, the service providing system 2 performs determination whether or not the service can be provided to the user, if necessary (#2). More specifically, it first requests the mediation system 10 to transmit the personal information necessary for the determination to the service providing system 2 as shown in Fig. 12 (#21). For example, if sales of liquor is wanted, it request the personal information about the item whether or not the user is twenty or older.

The mediation system 10 instructs the user's terminal device 3 to extract the requested personal information and transmit the same to the service providing system 2 (#22). Then, the terminal device 3 generates the answer information 76 in accordance with the user's personal information 700 and transmits the same to the service providing system 2 that made the request (#23). For example, if the personal information 700 has the contents as shown in Fig. 6, the answer information 76 that indicates "twenty or older = Yes" is obtained in accordance with the birth date and the present date. Namely, the user can be determined to be twenty or older. Note that the instruction by the mediation system 10 may be performed by transmitting a program (a determination program) for extracting the requested personal information.

It is possible to record by writing history information indicating that the answer information 76 is transmitted in a log file (#24). Thus, it is possible to obtain a document for investigating whether or not the service provider intends to obtain the user's personal information without proper authorization. The log file may be stored either in the mediation system 10 or in the terminal device 3. Note that if the service can be provided to any one, the process in Steps #21-#24, i.e., the process in Step #2 shown in Fig. 10 is not necessary.

With reference to Fig. 10 again, the service providing system 2 selects the secondary provider if necessary (#3). It obtains the user's personal information about the item necessary for selection from the user's terminal device 3 and selects in accordance with the obtained user's personal information. The process for obtaining the personal information is performed in the procedure shown in Fig. 13. First, it requests the mediation system 10 for necessary personal information (#31). For example, if a trucking company is to be selected, personal information about the area where the user lives is requested.

The mediation system 10 instructs the user's terminal device 3 to extract the requested personal information and to transmit the same to the service providing system 2 in the same manner as the case of Step #22 shown in Fig. 12 (#32). The terminal device 3 generates the answer information 76 in accordance with the extracted personal information and transmits the same to the service providing system 2 that made the request in the same manner as the case of Step #23 (#33). On this occasion, history information of the transmission is recorded in the log file (#34).

With reference to Fig. 10 again, when it is confirmed that the user is suitable for receiving the service (#1 and #2) and the secondary provider is selected (#3), it performs the process for giving personal information that is necessary finally for providing the service to the user (for example, an address of the destination of the goods and a credit card number for collecting payment) from the terminal device 3 to the service providing system 2 (#4).

Namely, as shown in Fig. 14, the service providing system 2 requests the mediation system 10 to transmit necessary personal information (#41). The mediation system 10 instructs the user's terminal device 3 to transmit the requested personal information to the service providing system 2 (#42). It is possible to make the instruction by transmitting a program for extracting the information.

The terminal device 3 extracts the requested personal information from the user's personal information 700 and transmits the same to the service providing system 2 that made the request (#43). On this occasion, in the same manner as the case of Step #24 shown in Fig. 12, history information of the transmission is recorded in the log file (#44). The service providing system 2 transfers the received personal information to the secondary provider if necessary (#45).

Then, with reference to Fig. 10 again, the service provider and the secondary providers perform the process for providing the service to the user in accordance with the received personal information, respectively (#5).

According to this embodiment, users can manage users' personal information by themselves and give only minimum personal information necessary for receiving a service to a service provider. Thus, leak and dispersion of personal information can be prevented.

In addition, unauthorized usage of a service by a third party can be prevented by performing personal authentication and individual authentication. As the personal information or the like is encrypted by using different public keys for each destination of transmission, leak and dispersion of personal information can be prevented more effectively. As a digital signature is affixed to the personal information, unauthorized rewriting of personal information can be prevented.

Therefore, users can receive the service from the service provider with confidence. On the other hand, the service provider can trust the contents of the personal information and accept an order with confidence.

Although encryption of the personal information or the like is performed by the public key cryptography method in this embodiment, it is possible to perform it by a common key cryptography method or by a combination of them.

It is possible that the terminal device 3 confirms that contents of the personal information is right prior to transmitting the user's personal information to the service providing system 2. For example, prior to transmitting the personal information about the credit card, the terminal device 3 may request a credit card company for credit check so as to check whether or not the validated period of the credit card is expired or whether or not the limit amount is exceeded. Similarly, it is possible to inquire a municipal office or the like about update of the user user's address due to moving for the like. A program for requesting these checks may be delivered from the mediation system 10 to the terminal device 3.

The terminal device 3 may inform the user of the specific item of the personal information that is about to be transmitted to the service providing system 2 prior to transmitting the personal information to the service providing system 2. Then, it is possible that the transmission is performed when a click of a button that is displayed on the Web browser or other operation is done. Alternatively, it is possible to inform the user after transmission is performed.

Furthermore, a structure of the entire or a part of the personal information management system 1, the mediation system 10, the service providing system 2 or the terminal device 3, contents of the personal information, the contents or the order of the process can be modified if necessary in accordance with the spirit of the present invention.

### INDUSTRIAL APPLICABILITY

As described above, the personal information management system, the mediation system and the terminal device according to the present invention are useful for a system in which users can manage users' personal information by themselves and give personal information necessary for receiving a service to a service provider with confidence, so that a service with high reliability can be provided.

## Claims

1. A personal information management system comprising a service provider system of a service provider, a terminal device of a user who wants to receive a service provided by the service provider, and a mediation system for mediating personal information of the user to be given to the service provider, wherein
the terminal device of the user is provided with an personal information storage portion for storing personal information about one or more items of the user, a personal authentication portion for authenticating the user to have a right to use the terminal device, and a personal information transmission portion for transmitting the user's personal information in accordance with an instruction from the mediation system,
the service provider system of the service provider is provided with a personal information requesting portion for requesting the mediation system for the user's personal information about items necessary for the service provider to provide the service, and a personal information reception portion for receiving the requested user's personal information from the terminal device of the user, and
the mediation system is provided with a terminal suitability determining portion for determining whether or not the terminal device of the user is suitable for receiving the service, and a transmission instructing portion for instructing the terminal device to transmit the user's personal information about the necessary items requested by the personal information requesting portion of the service provider system of the service provider to the service provider system when the personal authentication portion of the terminal device of the user authenticates the user to have the right and the terminal suitability determining portion determines that the terminal device is suitable for receiving the service.

2. The personal information management system according to claim 1, wherein the mediation system is provided with an item storage portion for storing item information that indicates items of personal information necessary for the service provider to provide the service prior to reception of the service, and the transmission instructing portion instructs to transmit the user's personal information about items indicated in the item information.

3. The personal information management system according to claim 2, wherein the item storage portion stores first item information that indicates items of personal information necessary for the service provider directly and second item information that indicates items of personal information necessary for a secondary provider that is an agency for the service provider as the item information, and the transmission instructing portion instructs to transmit the user's personal information about items indicated in the first item information to the service provider and to transmit the user's personal information about items indicated in the second item information to the secondary provider.

4. The personal information management system according to claim 3, wherein the personal information transmission portion transmits the user's personal information after encrypting it by a public key cryptography method using different public keys for addresses, respectively.

5. The personal information management system according to any one of claims 1-4, wherein the personal information storage portion stores personal information whose contents are recognized to be correct by a person except the user as the user's personal information.

6. The personal information management system according to any one of claims 1-5, wherein the terminal device of the user is provided with a characteristic information storage portion for storing characteristic information that indicates physical characteristics of the user and a characteristic input portion for entering the physical characteristics of the user, and the personal authentication portion performs the authentication in accordance with the entered physical characteristics of the user and the characteristic information stored in the characteristic information storage portion.

7. A mediation system for mediating personal information of a user who wants to receive a service provided by a service provider, the information being given from the user to the service provider, comprising:
a terminal suitability determining portion for determining whether or not a terminal device of the user is suitable for receiving the service; and
a transmission instructing portion for instructing the terminal device to transmit the user's personal information requested by the service provider about items necessary for the service provider to provide the service to the service provider when the terminal device of the user authenticates the user to have a right to use the terminal device and the terminal suitability determining portion determines that the terminal device is suitable for receiving the service.

8. The mediation system according to claim 7, wherein the service provider includes an item storage portion for storing item information that indicates items of personal information necessary for the service provider to provide the service prior to reception of the service, and the transmission instructing portion instructs to transmit the user's personal information about items indicated in the item information.

9. A terminal device that is used for receiving a service provided by a service provider, comprising:
a personal information storage portion for storing personal information about one or more items of a user who wants to receive the service;
a personal authentication portion for authenticating the user to have a right to use the terminal device;
a service requesting portion for requesting the service provider to provide the service to the user when the user is authenticated to have the right; and
a personal information transmission portion for transmitting the user's personal information about items necessary for the service provider to provide the requested service to the service provider.

10. The terminal device according to claim 9, wherein the personal information transmission portion transmits personal information, among the user's personal information about the necessary items, which is necessary only for a secondary provider that is an agency for the service provider to the secondary provider instead of the service provider.

11. The terminal device according to claim 10, wherein the personal information transmission portion transmits personal information to be transmitted to the service provider and personal information to be transmitted to the secondary provider after encrypting them by a public key cryptography method using different public keys, respectively.

12. The terminal device according to any one of claims 9-11, wherein the personal information storage portion stores personal information whose contents are recognized to be correct by a person except the user as the user's personal information.

13. The terminal device according to any one of claims 9-12, further comprising a characteristic information storage portion for storing characteristic information that indicates physical characteristics of the user and a characteristic input portion for entering the physical characteristics of the user, wherein the personal authentication portion performs the authentication in accordance with the entered physical characteristics of the user and the characteristic information stored in the characteristic information storage portion.
